# EUROPEAN PATENT SPECIFICATION

(11) **EP 3 426 023 B1**
(45) Date of publication and mention of the grant of the patent: **08.04.2020**
(21) Application number: 17722897.0
(22) Date of filing: 07.03.2017
(51) Int. Cl.: A01K 47/02, A01K 47/04, A01K 47/00, A01K 67/033

(54) **BREEDING COMB FOR SOLITAIRE BEES**
BRUTWABE FÜR EINSIEDLERBIENEN
PEIGNE D'ÉLEVAGE POUR ABEILLES SOLITAIRES

(30) Priority: 10.03.2016 PL 12494716 U
(43) Date of publication of application: 16.01.2019
(73) Proprietor: Kapka, Damian, 95-015 Glowno (PL); Kapka, Przemyslaw, 95-015 Glowno (PL)
(72) Inventor: Kapka, Damian, 95-015 Glowno (PL); Kapka, Przemyslaw, 95-015 Glowno (PL)
(74) Representative: Sawicki, Igor
(86) International application number: PCT/PL2017/000020
(87) International publication number: WO 2017/155419

(56) References cited:
- WO-A2-2007/122513
- DE-U1-202013 000 232
- JP-A- H08 205 711
- US-A- 4 491 994
- US-B1- 8 465 340

## Description

This invention relates to a breeding comb for solitary bees for application in the field of beekeeping.

In the general opinion, bees are above all producers of honey and wax as well as the other bee products. Nevertheless, the most essential role of bees for man is pollination of wild and cultivated plants.

The progressive specialisation in fruit growing, the decreasing number of apiaries with honeybees, as well as the chemicalisation of agriculture all cause the collapse of honeybee colonies make that the problem of crop pollination is becoming more and more essential to stabilization of yields.

It is estimated that bees from breeding colonies cover approximately half of the needs concerning pollination of plants. The remaining gap can be potentially filled by wild pollinating insects - primarily bumblebees and solitary bees, but their population is unfortunately constantly decreasing. Apidae insects are characterised by great species diversity. Solitary bees include the following genera and species: Yellow-faced Bee (Hylaeus), Small Carpenter Bee (Ceratina), Heriades, Small Scissor Bee (Chelostoma), Mason bees (Hoplitis, Osmia), Banded Mud Bee (Chalicodoma), Wood-carving Leaf-cutter (Megachile), Wool Carder Bee (Anthidium). In natural conditions, bees use as nests places like hollow plant stems, e.g. reeds, as well as other kinds of cavities. The great adaptability of some species is evidenced by the fact that they can nest in very unusual places, e.g. hollow bricks or thatched roofs. Nests are of linear character, they consist of successively arranged larval cells. Some species create colonies of nests developing under conditions of easy access to a large number of channels. The gathering of pollen into the nests begins from the end of the channels, which are blanked off, and progresses towards the entrance. Each single cell is filled with pollen by the females and then it is equipped with an egg and separated from the next cell with a species-specific barrier. Depending on the length of the channel, typically several to more than a dozen larval cells are formed in the nest. After sealing the last cell, the entrance to the nest is secured with an appropriate plug that protects the larvae against natural enemies and unfavourable weather conditions.

Solitary bees search for food within a small distance from the nests (approx. 700 m) and they feed on a wide range of foods. Especially remarkable is the complete lack of aggressiveness towards people, which makes it possible to use solitary bees in kitchen gardens.

The traditional rearing of solitary bees makes use of common reed for nests. Disadvantages of the commonly used nesting materials include the greatly labour-consuming preparation of reed nests (i.e. the annually repeated harvesting, selection, defoliation and cutting of reed stems), the risk of allergic sensitisation (when the reeds are torn open and the cocoons are taken out, tiny particles of unused pollen and spores of pathogenic fungi are released to the air), the unfeasibility of removing the remains of cocoons from the nest and carrying out a selection thereof as well as the difficulties with getting completely rid of pests and parasites.

From the description of PCT/IB2007/001989 published as WO 2007/122513, there are known solutions relating to a method and an apparatus for breeding and an incubator for solitary bees, which rely on the use of corrugated sheets which folded in half create nesting tunnels. In other embodiment, corrugated sheet may be formed separately. Each corrugated sheet preferably incorporates a flat area between the closed ends of the cavities and the line of fold. A bee nest is formed by stacking corrugated sheets one on top of another.

The solution according to WO 2007/122513 presents many disadvantages. In particular, the stack of corrugated sheets forming bee nest according to WO2007/122513 is not stabilised. Corrugated sheets which are just placed one on top of another cannot form stable construction. WO2007/122513 does not provide any method which would enable preventing for example unfolding of the sheets and stabilisation of the stack of corrugated sheets. Therefore in the solution according to WO 2007/122513 the stabilisation of the sheets is only possible when the nesting tunnels are placed in the on-site incubator. Thus, the size of the corrugated sheets must be adjusted to the on-site incubator. Furthermore, this solution does not enable combining corrugated sheets in horizontal plane, which would not meet the individual needs.

Furthermore, the arrangement of sheets as described in WO 2007/122513 requires the use of high quantities of material, since for example in the places of contact between first and second corrugated sheet there is a "double wall" which has no additional value for the nest. Also, a flat area situated between the closed ends of the cavities and the line of fold reduces the nesting space.

Furthermore, the material preferably used in WO2007/122513 is very susceptible to weather conditions, which has an adverse effect on its durability.

From the utility model description PL67276, there is known a design in which thermoformable foil is used for the production of habitat sheets. Unfortunately, there is a barrier in this method related to the thickness of the walls of the sheets. They are thinner and thus have shorter lifetime. Furthermore, the sheets made according to the described utility model have different thickness at different places and are easily damaged mechanically when the cocoons are removed. Moreover, these sheets can become deformed when exposed to higher temperatures, e.g. under exposure to solar radiation.

Additionally, the sheets are overlaid directly one onto another and there is no possibility to connect them permanently.US 4 491 994 patent description provides a bee nest in a form of an elongate flexible strip assembly comprising a flexible backing strip preferably of porous paper, along one surface of which is secured a pleated strip of similar material forming adjacent open channels transverse to the backing strip. The elongate strip assembly is preferably wound into a roll, so that the open side of each channel is closed by the other surface of the backing strip to form a multiplicity of closely spaced "U-shaped" bores in each of which the wild bees construct several individual nesting cells end to end. The nesting bores are all closed at one end as required by the wild bees, preferably by a flat sheet of similar material. Between each two adjacent nesting bores is a small generally triangular bore, formed between the pleated and backing strips which is however too small for nesting purposes and not used by the wild bees.

Another embodiment US 4 491 994 discloses a nesting domicile comprising a stack of discrete generally planar strip assemblies as described above, secured together as by adhesive tape, and having the backing member. In this embodiment, the backing strip is desirably of substantial thickness to provide rigidity to domicile.

The bee nest according to US 4 491 994 presents many disadvantages, in particular the strip assembly forming a "sheet" is made of several preferably paper layers, which are secured one to another with adhesives, which does not result in stable and reproducible strip assemblies. Furthermore, the bee nest formed by the stack of strip assemblies is secured together as by adhesive tape, which is not resistant to variable weather and temperature conditions. Also the adhesive tape could easily get detached which would lead to the destabilization of the stack of strip assemblies.

Also in the US 4 491 994 the back cover is attached to the stack of strip assembly by adhesive tape which does not result in stable and durable. Furthermore, the back cover covers the entire stack of strip assemblies, and therefore when removed, it opens the entire stack of strip assemblies, which does not enable opening only individual strip assemblies.

Furthermore, between each two adjacent nesting bores is a small generally triangular bore, formed between the pleated and backing strips which is however too small for nesting purposes and not used by the wild bees. This results in low density of nesting cavities per unit surface area.

The objective of the design according to the present invention is provision of such a nesting habitat for solitary bees that will enable acquisition, without disturbing the natural developmental processes, of bee cocoons or larvae with the same parameters as are acquired in the natural process as well as a reduction in workload and costs related to breeding these bees, without an adverse effect on the insects themselves. Due to the high effectiveness of pollination of cultivated plants, it is of high significance to implement easy and effective ways of breeding, in materials that make alternatives forms of natural nests.

Breeding comb for solitary bees, comprised of single modules in the form of a sheet containing grooves and locks is characterised in that the grooves of the sheet are separated from one another with side walls, while in the lower part the base of the sheet contains lugs that make blocking locks and rabbets in which the side walls of the particular module are inserted, thus forming nesting tunnels with a cross-section with a shape close to a polyhedron while in the front part the base of the sheet contains a lug and in the rear part the sheet is limited with a rear wall containing a clasp that allows for additional stabilisation of the modules connected one on top of another.

The external side walls can be fitted with clasps that make side locks, right and left respectively, that enable serial connection of the selected sheets with one another.

Such construction of sheets containing grooves as well as locks facilitating overlaying of the sheets and also preventing their movement in the horizontal plane, allows joining singular modules (both in the vertical and the horizontal plane) into a form of a wall in which such arranged sheets form one uniform and connected into a whole assembly for breeding solitary bees, filled with nesting tunnels with a cross-section close to a polyhedron. Furthermore, the fact that the side walls are moved away from the beginning of the module makes it possible to create a protrusion (so-called 'balcony') on which a bee can effortlessly land and also easily assume the right position to enter the nest (facing forwards or rearwards) depending on the current activity - cleaning the nest, gathering the pollen, laying eggs, building a barrier. An additional advantage of the 'balcony' is that it reinforces the structure and makes it more rigid, and also diffuses light, which in turn reduces the temperature inside the nest.

The single breeding combs can be made with the method of injection based on moulds of appropriate shape. Such a way of production provides almost unlimited options as to the colour of the casts. It is possible to add appropriate components that improve resistance to inter alia UV radiation, low or high temperatures, etc. Furthermore, different kinds of plastics can be used in this technology.

It is most advantageous if the breeding comb is made of a plastic where the contact itself between the bees and the artificial material does not adversely affect the process of colonisation of the tunnels, development of the larvae and transformation of the bees into the successive developmental stages.

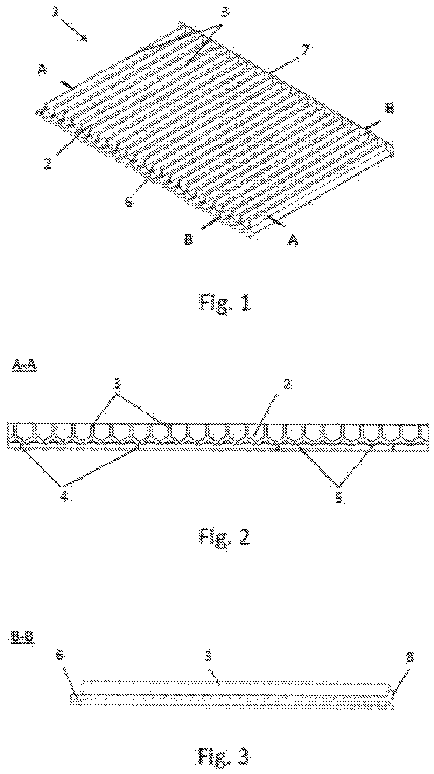

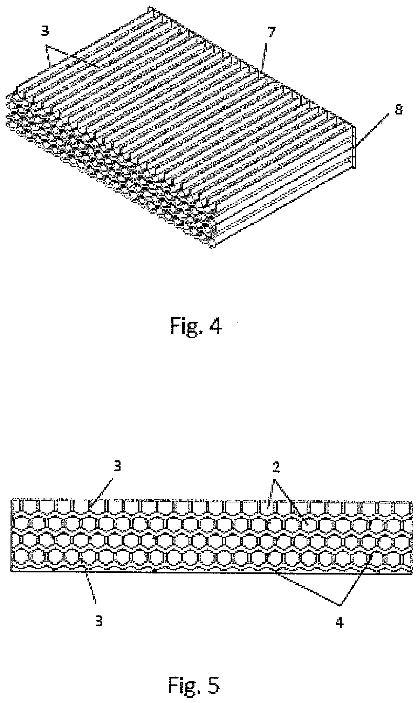

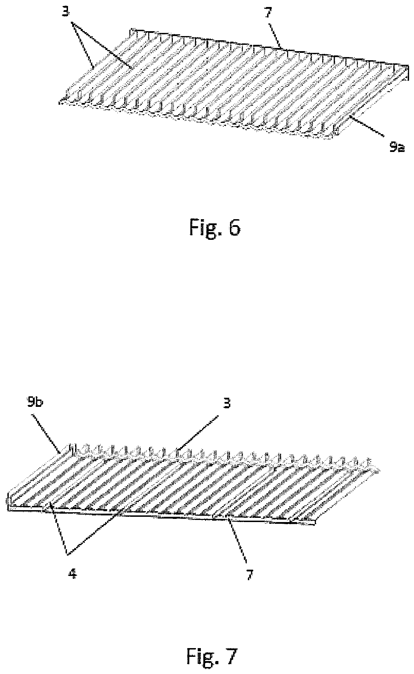

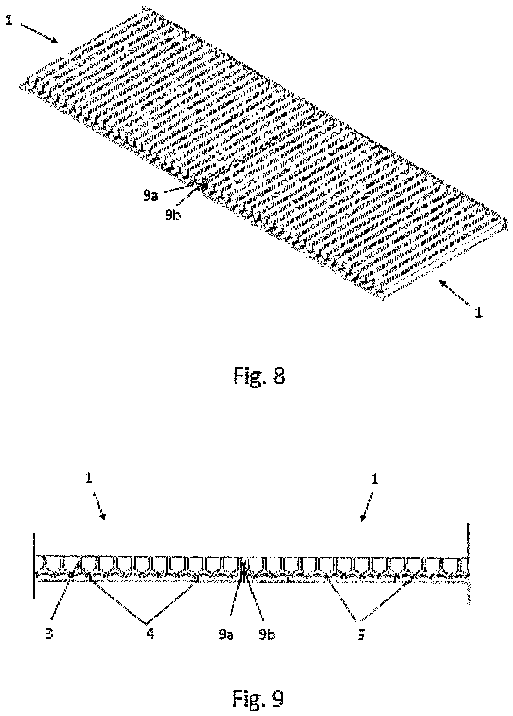

The module of a package made up of single modules can be enclosed with walls of a wooden nesting box, which additionally protects and isolates the process of colonisation of the nesting tunnels from the external environment and gives the artificial habitats an aesthetic appearance. The invention has been presented in drawings where Fig. 1 shows a perspective view of a single module of the breeding comb, with marked cross-sections A-A and B-B; Fig. 2 shows cross-section A-A of a single module of the breeding comb; Fig. 3 shows cross-section B-B of a single module of the breeding comb; Fig. 4 shows a perspective view of four single modules of the breeding comb overlaid one onto another; Fig. 5 shows a cross-section of four single modules of the breeding comb overlaid one onto another; Fig. 6 shows a perspective view of a single module of the breeding comb with a right side lock; Fig. 7 shows a perspective view of a single module of the breeding comb with a left side lock; Fig. 8 shows a perspective view of two single modules of the breeding comb connected serially; Fig. 9 shows a cross-section of two single modules of the breeding comb connected serially.

In a non-limiting example of execution, the breeding comb consists of single modules, each in the form of a sheet 1 comprising grooves 2 separated with side walls 3. In the bottom part, the base of the sheet 1 comprises lugs 4 making blocking locks and rabbets 5 in which the side walls 3 of the bottom module are inserted, thus creating nesting tunnels with a cross-section close to a polyhedron. In the front part, the base of the sheet 1 comprises a lug 6. In the rear part, the sheet 1 is limited by a rear wall 7 comprising a clasp 8 enabling additional stabilisation of the modules that are connected one on top of another.

The external side walls 3 of the sheet 1 can be fitted with clasps that make side locks 9a and 9b that make side locks, right and left respectively which make it possible to attach serially another module.

## Claims

1. A breeding comb for solitary bees, comprised of single modules in the form of a sheet containing grooves and locks wherein the grooves (**2**) of the sheet (**1**) are separated from one another with side walls (**3**), and the lower part of the base of the sheet (1) contains lugs (4) that make blocking locks, **characterised in that** the lower part of the sheet contains rabbets (**5**), situated between the side walls(3) of the same sheet (1), in which said rabbets (5) the side walls (**3**) of the subsequent module are inserted, thus forming nesting tunnels with a cross-section with a shape close to a polyhedron, while in the front part the base of the sheet (**1**) contains a lug (**6**) and in the rear part the sheet (**1**) is limited with a rear wall (**7**) containing a clasp (**8**).

2. The breeding comb according to claim 1 **characterized in that,** the external side walls (**3**) of the sheet (**1**) are fitted with clasps of a sheet (**9a**) and of a sheet (**9b**) that make side locks, right and left respectively.

## Patentansprüche

1. Brutwabe für Einsiedlerbienen besteht aus einzelnen Modulen in Form einer Platte mit Vertiefungen und Schlösser, wobei Vertiefungen (2) der Platte (1) voneinander mit Seitenwänden (3) getrennt sind, dagegen die Basis der Platte (1) enthält im unteren Teil Auslässe (4), die als Sperrschlosses dienen, **gekennzeichnet dadurch, dass** der untere Teil der Platte (1) Einlässe (5) enthält, die zwischen Seitenwänden (3) der selbe Platte (1) befestigt sind, in deren Einlässen (5) die Seitenwände (3) des unteren Modules befestigt sind, in dieser Weise bilden sie Nestkanäle vom Durchschnitt in der Form ähnlich der Polyeder, dagegen die Basis der Platte (1) enthält im vorderen Teil einen Vorsprung (6), dagegen im hinteren Teil ist die Platte (1) mit einer Rückwand (7) beschränkt, mit Riegel (8).

2. Brutwabe für Einsiedlerbienen nach Anspruch 1 **gekennzeichnet dadurch, dass** äußere Seitenwände (3) der Platte (1) in Haken (9a) und (9b) ausgestattet sind, sie bilden Seitenschlösser, entsprechend rechts oder links.

## Revendications

1. Peigne d'élevage pour abeilles solitaires, composé de modules individuels sous forme de plaque à rainures et à verrous, les rainures (2) de la plaque (1) étant séparées entre elles par des parois latérales (3), et la base de la plaque (1) comprenant dans sa partie inférieure des languettes (4), constituant desverrous, **caractérisé en ce que** la partie inférieure de la plaque (1) comprend des entrées (5), situées entre les parois latérales (3) du même module (1), dans lesquelles entrées (5) sont placées les parois latérales (3) du module inférieur, formant ainsi des canaux de nidification à section proche dans sa forme à un polyèdre et dans sa partie avant la base de la plaque (1) comprenant une saillie (6), la plaque (1) étant limitée dans sa partie arrière par la paroi arrière (7), contenant un verrouillage (8).

2. Peigne d'élevage selon la revendication 1, **caractérisé en ce que** les parois latérales extérieures (3) de la plaque (1) sont munies de crochets (9a) et (9b) constituant des verrous latéraux respectivement droit ou gauche.
